**Europäisches Patentamt**

**European Patent Office**

**Office européen des brevets**

(19)

(11) Veröffentlichungsnummer : **0 407 738 B1**

## (12) EUROPÄISCHE PATENTSCHRIFT

(45) Veröffentlichungstag der Patentschrift :
**05.08.92 Patentblatt 92/32**

(51) Int. Cl.⁵ : **F04C 11/00, B23Q 3/18**

(21) Anmeldenummer : **90110766.4**

(22) Anmeldetag : **07.06.90**

(54) **Pumpenanordnung an einer Maschine, insbesondere Schmierölpumpe an einer Brennkraftmaschine.**

(30) Priorität : **12.07.89 DE 3923019**

(43) Veröffentlichungstag der Anmeldung :
**16.01.91 Patentblatt 91/03**

(45) Bekanntmachung des Hinweises auf die Patenterteilung :
**05.08.92 Patentblatt 92/32**

(84) Benannte Vertragsstaaten :
**AT DE FR GB IT**

(56) Entgegenhaltungen :
**EP-A- 0 297 147**
**US-A- 1 584 207**
**US-A- 2 046 774**

(73) Patentinhaber : **Bayerische Motoren Werke Aktiengesellschaft**
**Patentabteilung AJ-30 Postfach 40 02 40**
**Petuelring 130**
**W-8000 München 40 (DE)**

(72) Erfinder : **Heer, Siegfried**
**Schlüsselhofgasse 26/12**
**A-4400 Steyr (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Pumpenanordnung an einer Maschine mit den gattungsbildenden Merkmalen des Patentanspruches 1.

Eine derartige Pumpenanordnung ist beispielsweise aus der DE-OS 30 22 419 bekannt, wobei das mit einem Kurbelgehäuse lösbar verbundene Pumpengehäuse über einen in eine benachbarte Kurbelwellen-Lagerbohrung eingreifenden Zentrierbund relativ zur Kurbelwelle zentriert ist. Mit dem Zentrierbund wird bei üblichen Abmessungen des Kurbelwellenlagers die tragende Breite der in der Kurbelwellen-Lagerbohrung vorgesehenen Lagerschale vermindert.

Der Erfindung liegt die Aufgabe zugrunde, ohne den vorstehend genannten Nachteil für eine gattungsgemäße Pumpenanordnung unter Vermeidung anordnungsgebundener zusätzlicher Zentriermittel eine Zentrierung mit geringem Aufwand aufzuzeigen.

Diese Aufgabe wird mit den kennzeichnenden Mitteln des Patentanspruches 1 gelöst.

Zwar läßt der bekannte Stand der Technik des an einem Maschinenteil zentrierten Pumpengehäuseteiles auch eine in einer Aufspannung durchführbare Fertigung der Zentriereinrichtung und der Laufflächen für die Pumpenrotoren zu. Durch die erfindungsgemäße wellenzentrierte Pumpenanordnung ergibt sich jedoch bei kurzer Toleranzkette der Vorteil kleiner Axial- und Radialspiele im Pumpen-Radsatz, wodurch das Betriebsverhalten der Pumpe verbessert ist.

Die Erfindung ist anhand eines Ausführungsbeispiels beschrieben.

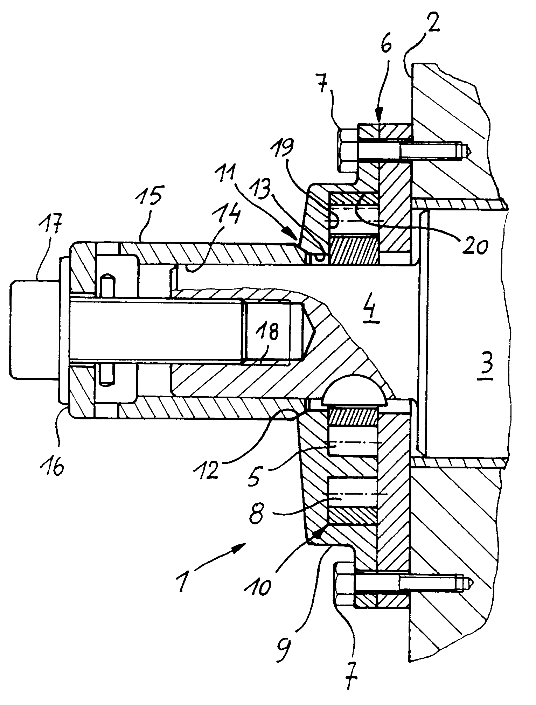

Die einzige Zeichnung zeigt im Schnitt eine Schmierölpumpe 1 an einer nicht näher dargestellten Hubkolben-Brennkraftmaschine 2 mit einer Kurbelwelle 3. Diese weist in einem Endbereich einen Zapfen 4 auf, der einen inneren Pumpenrotor 5 der Schmierölpumpe 1 trägt und ferner ein zweiteilig gestaltetes Pumpengehäuse 6 durchsetzt. Das Pumpengehäuse 6 ist an der Brennkraftmaschine 1 mittels Schraubbolzen 7 lösbar angeordnet.

Der innere Pumpenrotor 5 kämmt mit einem äußeren Pumpenrotor 8, der in einem Pumpengehäuseteil 9 in einer brennkraftmaschinenseitig angeordneten Ausnehmung 10 drehbeweglich gelagert ist. Weiter weist das Pumpengehäuseteil 9 auf seiner anderen, abgewandten Seite eine zum freien Ende des Zapfens 4 der Kurbelwelle 3 gerichtete Zentriereinrichtung 11 auf. Diese dient dazu, das Pumpengehäuse 6 bzw. das Pumpengehäuseteil 9 mit dem drehbeweglich gelagerten äußeren Pumpenrotor 8 bei der Anordnung an der Brennkraftmaschine 2 in einen günstigen gegenseitigen Eingriff bei kleinem Spiel mit dem auf dem Zapfen 4 der Kurbelwelle 3 drehfest angeordneten inneren Pumpenrotor 5 zu bringen.

Wie aus der Zeichnung ersichtlich, ist die Zentriereinrichtung 11 als eine zum freien Ende des Zapfens 4 gerichtete Fase 12 an einer Durchgangsbohrung 13 für den Zapfen 4 im Pumpengehäuseteil 9 ausgebildet. Die Fase 12 dient als Anschlag für eine im freien Endbereich des Zapfens 4 über einen axialen Schiebesitz 14 wellenzentrierte Zentrierhülse 15. Diese ist zur Positionierung des Pumpengehäuses 6 bzw. des Pumpengehäuseteiles 9 bei dessen Montage an der Brennkraftmaschine 2 bis zur endgültigen Fixierung mittels der Schraubbolzen 7 gegen die Fase 12 axial vorgespannt angeordnet. Hierfür ist die Zentrierhülse 15 mit in einer Stirnwand 16 unverlierbar angeordneten Spannschraube 17 ausgerüstet, die in ein im Zapfen 4 der Kurbwelle 3 axial angeordnetes Sacklochgewinde 18 eingreift.

Die in einer Aufspannung durchführbare Fertigung der Fase 12 einerseits des Pumpengehäuseteiles 9 und der axialen und radialen Laufflächen 19 und 20 der Ausnehmung 10 für den äußeren Pumpenrotor 8 andererseits ergibt in Verbindung mit der über die Zentrierhülse 15 bewirkten wellenzentrierten Anordnung der Schmierölpumpe 1 bzw. des Pumpengehäuses 6 bei kurzer Toleranzkette relativ kleine Axial- und Radialspiele in dem aus den beiden Pumpenrotoren 5 und 8 gebildeten Pumpen-Radsatz. Damit ist das Betriebsverhalten der Schmierölpumpe 1 unter allen Betriebsbedingungen verbessert.

Die vorbeschriebene Zentrierhülse 15 mit der dem axialen Vorspannen dienenden Spannschraube 17 ist insbesondere für Serviceleistungen geeignet. Für Pumpenanordnungen in der Serie wird die Zentrierhülse 15 vorzugsweise pneumatisch oder hydraulisch axial vorgespannt angeordnet. Für eine derartige Anordnung relativ zur Maschinenwelle 3 wird die Zentrierhülse 15 über an der Maschinenwelle 3 formschlüssig angreifende Haltemittel, insbesondere spreizbar ausgebildete Haltemittel, festgelegt.

## Patentansprüche

1. Pumpenanordnung an einer Maschine, insbesondere Schmierölpumpe an einer Brennkraftmaschine,
   – wobei ein Endbereich einer Maschinenwelle (Kurbelwelle 3 bzw. Zapfen 4) ein mehrteilig gestaltetes Pumpengehäuse (6) durchsetzt und einen inneren Pumpenrotor (5) trägt, der
   – mit einem äußeren, in einem Pumpengehäuseteil (9) drehbeweglich gelagerten Pumpenrotor (8) kämmt, und

– das Pumpengehäuseteil (9) eine Zentriereinrichtung (11) für das mit der Maschine (2) in lösbarer Verbindung stehende Pumpengehäuse (6) aufweist, dadurch gekennzeichnet,

– daß das Pumpengehäuseteil (9) einerseits eine maschinenseitig angeordnete Ausnehmung (10) zur Lagerung des äußeren Pumpenrotors (8) und andererseits eine zum freien Ende der Maschinenwelle (Kurbelwelle 3 bzw. Zapfen 4) gerichtete Zentriereinrichtung (11 bzw. Fase 12) aufweist und

– daß die Zentriereinrichtung (Fase 12) als Anschlag für eine im freien Endbereich der Maschinenwelle (Zapfen 4) anordbare, wellenzentrierte Zentrierhülse (15) vorgesehen ist, die

– zur Positionierung des Pumpengehäuses (6) bzw. Pumpengehäuseteiles (9) bei der Montage an der Maschine (2) gegen die Zentriereinrichtung (11 bzw. Fase 12) axial vorgespannt angeordnet ist.

2. Pumpenanordnung nach Anspruch 1, dadurch gekennzeichnet, daß die Zentrierhülse (15) mit in einer Stirnwand (16) axial gesichert angeordneter Spannschraube (17) ausgerüstet ist zum Eingriff in ein im Endbereich der Maschinenwelle (Zapfen 4) axial angeordnetes Sacklochgewinde (18).

3. Pumpenanordnung nach Anspruch 1, dadurch gekennzeichnet, daß die Zentrierhülse (15) pneumatisch oder hydraulisch axial vorgespannt angeordnet ist.

4. Pumpenanordnung nach Anspruch 3, dadurch gekennzeichnet, daß die Zentrierhülse (15) an der Maschinenwelle (3) zur pneumatischen oder hydraulischen Vorspannung über insbesondere spreizbare Haltemittel festgelegt ist.

## Claims

1. A pump arrangement on a machine, especially a lubricating oil pump on an internal combustion engine,
– in which an end zone of a machine shaft (crank-shaft 3 or journal 4) penetrates a pump housing (6) of multi-part configuration and carries an inner pump rotor (5) which
– meshes with an outer pump rotor (8) rotatably mounted in a pump housing part (9), and the pump housing part (9) comprises a centring device (11) for the pump housing (6) which is in detachable connection with the machine (2), characterised in that
– the pump housing part (9) comprises on the one hand an aperture (10) arranged on the machine for the mounting of the external pump rotor (8), and on the other hand a centring device (11 or chamfer 12) directed towards the free end of the machine shaft (crank-shaft 3 or journal 4), and
– in that the centring device (chamfer 12) is provided as a stop for a shaft-centred centring sleeve (15) arrangeable in the free end region of the machine shaft (journal 4), which sleeve
– is arranged axially initially stressed against the centring device (11 or chamfer 12), in the fitting on the machine (2), for the positioning of the pump housing (6) or pump housing part (9).

2. A pump arrangement according to Claim 1, characterised in that the centring sleeve (15) is equipped with a clamping screw (17), arranged axially secured in an end wall (16), for engagement in a threaded blind bore (18) arranged axially in the end region of the machine shaft (journal 4).

3. A pump arrangement according to Claim 1, characterised in that the centring sleeve (15) is arranged with pneumatic or hydraulic axial initial stress.

4. A pump arrangement according to Claim 3, characterised in that the centring sleeve (15) is made fast through especially expandable retaining means on the machine shaft (3) for pneumatic or hydraulic initial stress.

## Revendications

1. Agencement d'une pompe sur une machine, notamment d'une pompe d'huile de lubrification sur un moteur à combustion interne,
– agencement dans lequel une partie terminale d'un arbre du moteur (arbre de vilebrequin 3 ou bien tourillon 4) traverse un carter de pompe (6) constitué de plusieurs parties et porte un rotor interne (5) de la pompe,
– qui engrène avec un rotor externe (8) de la pompe monté mobile en rotation dans une partie (9) du carter de la pompe,
– et la partie (9) du carter de la pompe comporte un dispositif de centrage (11) pour le carter (6) de la pompe assemblé de façon amovible avec le moteur (2), agencement de pompe caractérisé
– en ce que la partie (9) du carter de la pompe, comporte, d'une part, un évidement (10) disposé côté moteur pour le montage du carter externe (8) de la pompe et, d'autre part, un dispositif de centrage (11 ou bien chanfrein l2) dirigé vers l'extrémité libre de l'arbre du moteur (arbre de vilebrequin 3 ou bien tourillon 4), et

– en ce que le dispositif de centrage (chanfrein 12) est prévu en tant que butée pour une douille de centrage (15) centrée sur l'arbre et susceptible d'être agencée sur la partie d'extrémité libre de l'arbre du moteur (tourillon 4),

– en ce que cette douille de centrage est précontrainte axialement contre le dispositif de centrage (11 ou bien chanfrein l2) pour permettre le positionnement du carter (6) de la pompe, ou bien de la partie de carter (9) de la pompe lors du montage sur le moteur (2).

2. Agencement de pompe selon la revendication 1, caractérisé en ce que la douille de centrage (15) est équipée d'une vis de serrage (17) disposée axialement de façon imperdable dans une paroi frontale (16) pour venir en prise dans un trou borgne fileté (18) disposé axialement dans la partie terminale de l'arbre du moteur (tourillon 4).

3. Agencement de pompe selon la revendication 1, caractérisé en ce que la douille de centrage (15) est précontrainte axialement pneumatiquement ou hydrauliquement.

4. Agencement de pompe selon la revendication 3, caractérisé en ce que la douille de centrage (15) est fixée sur l'arbre (3) du moteur, pour permettre sa précontrainte pneumatique ou hydraulique, par l'intermédiaire de moyens de maintien, notamment de moyens de maintien extensibles.